# FASCICULE DE BREVET EUROPEEN

(11) **EP 3 156 267 B1**
(45) Date de publication et mention de la délivrance du brevet: **08.05.2019**
(21) Numéro de dépôt: 15002898.3
(22) Date de dépôt: 12.10.2015
(51) Int. Cl.: B60C 25/13

(54) **MACHINE DE DÉTALONNAGE D'UN PNEU D'UNE ROUE**
MASCHINE ZUR ENTWULSTUNG EINES REIFENS EINES RADS
MACHINE FOR BREAKING A TIRE BEAD OF A WHEEL

(43) Date de publication de la demande: 19.04.2017
(73) Titulaire: du Quesne, Bertrand, 2018 Antwerpen (BE)
(72) Inventeur: du Quesne, Bertrand, 2018 Antwerpen (BE); du Quesne, Francis, 2018 Antwerpen (BE)
(74) Mandataire: ABYOO

(56) Documents cités:
- BE-A6- 1 005 417
- US-A- 4 804 030
- US-A1- 2006 151 121

## Description

### Domaine de l'invention

L'invention se rapporte au domaine des machines pour détalonner un pneu d'une roue, une opération qui est nécessaire préalablement au démontage proprement-dit du pneu.

L'invention concerne également une machine de montage et de démontage d'un pneu incluant une machine ou dispositif de détalonnage du pneu.

### État de la technique

Des machines pour détalonner un pneu d'une roue sont bien connues, par exemple du brevet américain US 3,780,785.

Dans cette machine connue, la roue est posée sur un plateau d'appui horizontal qui est monté sur une face supérieure d'un bâti. L'outil de détalonnage (parfois aussi appelé « pelle ») est monté à une colonne verticale pouvant se déplacer de manière guidée vers le bas afin de rapprocher l'outil de détalonnage vers le pneu et ensuite de pousser le talon du pneu vers le bas de manière à ce que ce talon se décolle de la jante. La colonne est constituée du cylindre d'un vérin hydraulique dont le piston est relié au bâti de la machine via une tige de piston. En actionnant ledit vérin, l'outil se déplacera donc verticalement vers le bas et en force, ce qui amènera l'outil dans sa course de travail. S'agissant d'un vérin à double action, son actionnement dans le sens inverse permet de ramener l'outil dans une position de repos afin de pouvoir dégager la roue de la machine.

Bien qu'une telle machine fonctionne bien, elle est relativement coûteuse et nécessite assez bien d'entretien.

D'autres machines connues sont décrites dans les documents US-20060151121, US-4804030 et BE-1005417.

### Résumé de l'invention

Un but de l'invention est de fournir une machine pour détalonner un pneu d'une jante de roue qui est moins couteuse que les machines connues.

L'invention est définie par la revendication 1. Les revendications dépendantes définissent des modes de réalisation préférés de l'invention.

Selon l'invention, il est fourni une machine de détalonnage d'un pneu d'une roue, comportant :
- un bâti conçu pour reposer sur un sol,
- un plateau d'appui pour y appuyer un coté latéral de la roue,
- un outil de détalonnage faisant face au plateau d'appui et monté à une structure porte-outil, ladite structure porte-outil étant montée mobile au bâti,
- un actionneur relié au bâti et à la structure porte-outil et configuré pour mettre la structure porte-outil en mouvement de sorte à déplacer l'outil de détalonnage vers le plateau d'appui,
   caractérisé en ce que
- ledit actionneur est un actionneur pneumatique,
   et en ce que
- la machine de détalonnage comprend en outre un amortisseur monté entre la structure porte-outil et le bâti pour amortir le mouvement de la structure porte-outil lorsqu'elle est mise en mouvement par ledit actionneur.

En effet, avec une telle machine, il n'est plus nécessaire d'utiliser un vérin hydraulique à double effet pour faire travailler l'outil de détalonnage, ni de prévoir une pompe hydraulique pour actionner ledit vérin, ce qui réduit fortement le coût de la machine. Un actionneur pneumatique est en effet meilleur marché et nécessite moins d'entretien qu'un vérin hydraulique double effet. Bien qu'un actionneur pneumatique requiert de l'air comprimé pour fonctionner, des sources d'air comprimé sont généralement déjà disponibles sur site, ne fut-ce que pour gonfler le pneu après son montage, et il n'est donc pas nécessaire que la machine comporte un compresseur, ce qui en réduit à nouveau le coût. Il suffit de prévoir un simple raccord pneumatique pour brancher l'actionneur pneumatique à ladite source d'air comprimé. La présence de l'amortisseur permet en outre d'amortir le mouvement de la structure porte-outil, en particulier au moment où le talon du pneu se décolle de la jante ainsi qu'après que le détalonnage se soit produit, ce qui réduit les chocs et vibrations qui se produiraient sinon lorsque la résistance offerte par le pneu s'effondre suite au détalonnage du pneu.

La combinaison de l'actionneur pneumatique et de l'amortisseur permet ainsi de réduire globalement le coût de la machine, tout en réduisant l'ampleur des chocs et des vibrations au moment du détalonnage et donc l'usure des pièces et/ou la fatigue des matériaux.

Selon l'invention, l'amortisseur est un amortisseur télescopique dont le cylindre est relié à la structure porte-outil ou au bâti et dont le piston est relié respectivement au bâti ou à la structure porte-outil via une tige de piston. De manière plus préférée, l'amortisseur est un amortisseur hydraulique. De tels amortisseurs sont en effet largement disponibles dans le commerce et relativement peu couteux.

Selon l'invention, l'amortisseur possède un coefficient d'amortissement différent selon que l'amortisseur agit dans un sens ou dans le sens opposé, ce qui permet de limiter plus fortement l'accélération de la structure porte-outil lorsqu'elle se déplace pour faire travailler l'outil de détalonnage (= dans un sens) que lorsqu'elle se déplace pour remettre l'outil dans une position de repos (= dans le sens opposé).

De préférence, l'actionneur est un coussin d'air gonflable dont une face est reliée à - ou bute sur le bâti, et dont une face opposée est reliée à - ou bute sur la structure porte-outil, ledit coussin d'air comportant au moins une entrée d'air comprimé. Des coussins d'air gonflables sont en effet largement disponibles dans le commerce et relativement peu couteux. Il peut par exemple s'agir de coussins d'air gonflables utilisés couramment comme amortisseurs dans les véhicules poids-lourds.

De préférence, le plateau d'appui forme un angle compris entre 0° et 10° par rapport à un plan horizontal, la structure porte-outil comporte une colonne montée mobile en translation linéaire guidée par rapport au bâti, et l'actionneur est configuré pour mettre la structure porte-outil en mouvement selon ladite translation linéaire.

De manière plus préférée, l'axe du cylindre de l'amortisseur est parallèle ou confondu à l'axe de la colonne, ce qui permet d'utiliser des liaisons mécaniques simples ainsi que d'encore mieux amortir les chocs.

De manière encore plus préférée, le cylindre de l'amortisseur est relié au bâti et le piston de l'amortisseur est relié à la structure porte-outil via la tige de piston. De cette manière, l'ouverture du cylindre, par laquelle sort la tige de piston, se trouvera au-dessus du piston et le risque de fuites de liquide hydraulique sera limité. L'amortisseur nécessitera ainsi moins d'entretien.

### Brève description des figures

Ces aspects ainsi que d'autres aspects de l'invention seront clarifiés dans la description détaillée de modes de réalisation particuliers de l'invention, référence étant faite aux dessins des figures, dans lesquelles :
- Fig.1: montre une vue en perspective d'une machine selon l'invention ;
- Fig.2: montre une vue de profil de la machine de la Fig.1 en position de repos;
- Fig.3: montre une vue de profil de la machine de la Fig.1 en position de fin de travail;
- Fig.4: montre une vue détaillée d'une partie de la machine de la Fig.1 ;
- Fig.5: montre schématiquement une vue en coupe longitudinale d'un exemple d'amortisseur d'une machine selon l'invention.
- Fig.6: montre schématiquement une vue en coupe longitudinale d'un autre exemple d'amortisseur d'une machine selon l'invention.

Les dessins des figures ne sont pas à l'échelle. Généralement, des éléments semblables sont dénotés par des références semblables dans les figures.

### Description détaillée de modes de réalisation particuliers

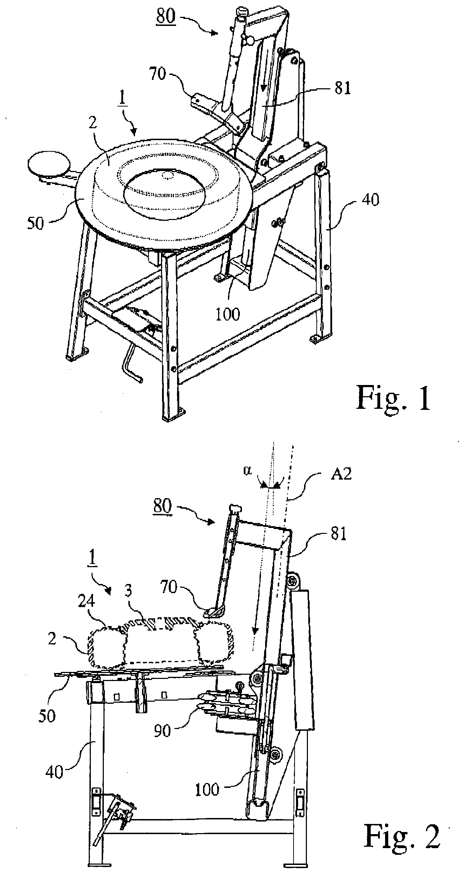

La Fig.1 montre une vue en perspective d'un exemple de machine selon l'invention. Cette machine comporte un bâti (40), conçu pour reposer sur le sol, ledit bâti (40) étant surmonté par un plateau d'appui (50) pour y appuyer un coté latéral d'une roue (1). De préférence, le plateau d'appui (50) forme un angle compris entre 0° et 10° par rapport à un plan horizontal.

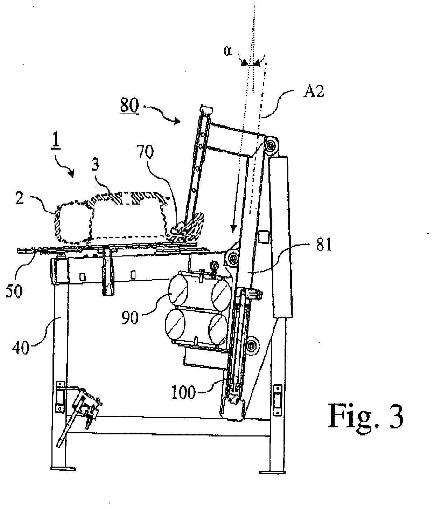

En face du plateau d'appui (50) se trouve un outil de détalonnage (70) (parfois appelé « pelle ») qui sert à décoller le pneu (2) de la roue (1). Un tel outil est bien connu de l'état de la technique. L'outil de détalonnage (70) est monté à une structure porte-outil (80). Ladite structure porte-outil (80) est montée mobile au bâti (40) de manière à pouvoir déplacer l'outil vers un flanc (24) du pneu (2) ou de l'en éloigner. De préférence, comme montré à la Fig.1, la structure porte-outil (80) comporte une colonne (81) montée mobile en translation linéaire guidée par rapport au bâti (40). Dans ce cas, l'axe de translation sera de préférence décalé par rapport à la verticale d'un angle α (alpha) compris entre 0 et 15°, comme on le voit mieux aux Figs.2 et 3. Ceci a pour effet de faciliter le détalonnage du pneu (2).

Pour mettre la structure porte-outil (80) en mouvement de sorte à déplacer l'outil de détalonnage (70) vers le plateau d'appui (50), on peut utiliser un mouvement angulaire au lieu d'utiliser un mouvement de translation linéaire. Dans ce cas, la structure porte-outil (80) peut par exemple être montée au bâti (40) au moyen d'un pivot d'axe horizontal.

Bien que cela ne soit pas indispensable, l'outil (70) est, dans cet exemple, monté à une extrémité distale d'un tube qui est enchâssé dans un manchon faisant partie de la structure porte-outil (80). Comme montré à la Fig.1, le tube et le manchon sont percés de trous pouvant se faire face, ce qui permet de fixer le tube au manchon, par exemple au moyen d'une goupille, et à différentes hauteurs par rapport au plateau d'appui (50), ceci afin de pouvoir s'accommoder de différentes largeurs de jantes.

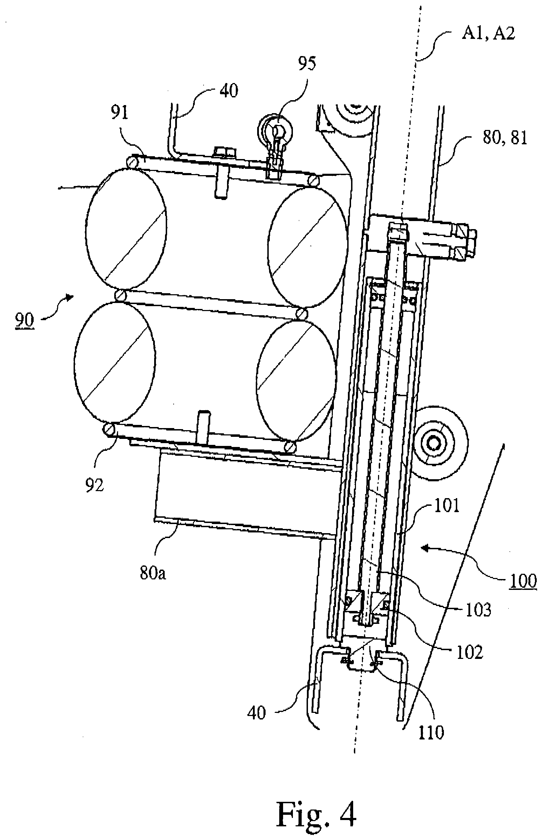

La machine comporte également un actionneur (90) relié au bâti (40) d'une part et à la structure porte-outil (80) d'autre part. Cet actionneur (90) est configuré pour mettre la structure porte-outil (80) en mouvement de sorte à déplacer l'outil de détalonnage (70) vers le plateau d'appui (50). Dans l'exemple de la Fig. 1, l'actionneur (90) est configuré pour mettre la structure porte-outil (80) en mouvement selon une translation linéaire, telle qu'indiquée par une flèche sur la Fig.1.
Selon l'invention, ledit actionneur (90) est un actionneur pneumatique. Plus de détails sur cet actionneur (90) seront fournis en relation avec la Fig. 4.

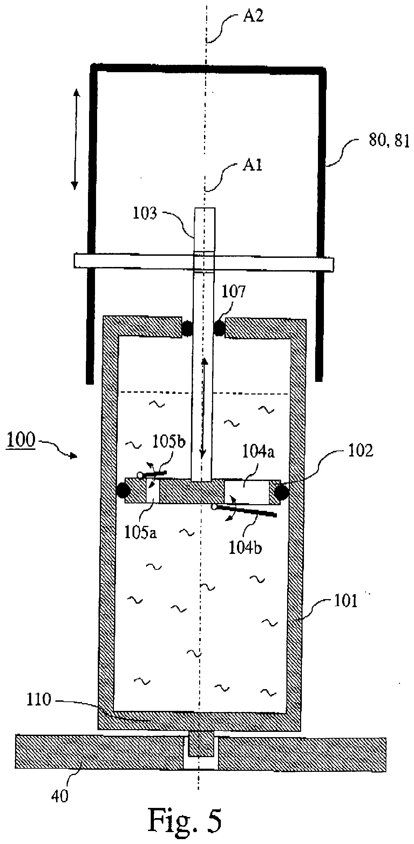

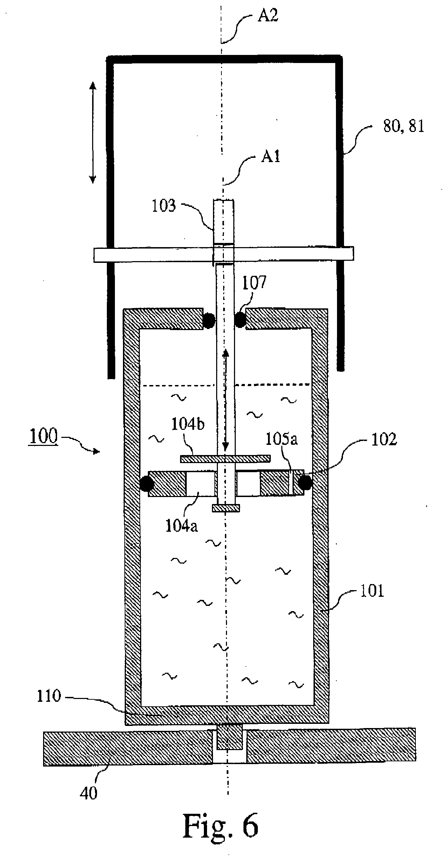

La machine comprend en outre un amortisseur (100) monté entre la structure porte-outil (80) et le bâti (40). Cet amortisseur (100) permet d'amortir le mouvement de la structure porte-outil (80) par rapport au bâti (40) lorsque ladite structure porte-outil (80) est mise en mouvement par l'actionneur (90). Plus de détails sur cet amortisseur (100) seront fournis en relation avec les Figs.5 et 6.

La Fig.2 montre une vue de profil de la machine de la Fig.1 lorsque la structure porte-outil (80) est en position de repos, c'est-à-dire lorsque la structure porte-outil (80), et donc l'outil de détalonnage (70), sont dans une position haute pour permettre à un opérateur de poser la roue (1) sur le plateau d'appui (50) sans être gêné par l'outil. Dans cette position de repos, ni l'actionneur (90) ni l'amortisseur (100) ne sont actifs. La Fig.3 montre une vue de profil de la machine de la Fig.1 en position de fin de travail, c'est-à-dire lorsque la structure porte-outil (80), et donc l'outil de détalonnage (70), est dans une position basse après détalonnage du pneu (2).

La Fig.4 montre une vue détaillée d'une partie de la machine de la Fig.1. On y voit l'actionneur (90) et l'amortisseur (100) ainsi que la manière dont ces deux éléments sont reliés au bâti (40) et à la structure porte-outil (80).
Dans cet exemple, l'actionneur (90) est un coussin d'air gonflable dont une face (91) est reliée à - ou bute sur le bâti (40), et dont une face opposée (92) est reliée à - ou bute sur la structure porte-outil (80). Dans cet exemple, la structure porte-outil (80) comporte une butée (80a) sur laquelle vient s'appuyer ladite face opposée du coussin d'air (90), mais il va de soi que bien d'autres formes de réalisation sont possibles. Le coussin d'air (90) comporte une entrée d'air comprimé (95), ce qui permet de le gonfler en raccordant l'entrée d'air comprimé (95) à une source d'air comprimé via une vanne commandable. En ouvrant cette vanne, le coussin d'air se gonflera et fera descendre en force la structure porte-outil (80), et donc l'outil de détalonnage (70), vers le flanc (24) du pneu (2) pour le détalonner. Ladite vanne possèdera également une position d'échappement permettant de relâcher la pression dans le coussin d'air lorsque le pneu est détalonné. Ladite vanne pourra par exemple être une vanne à trois voies. Sur la Fig.4, le coussin d'air est montré gonflé. Le coussin d'air (90) est dimensionné pour pouvoir exercer une force sur la structure mobile pouvant atteindre par exemple 5000 N à 25000 N pour le détalonnage d'un pneu (2) d'une roue (1) de voiture. Une course du coussin d'air (90) peut dans ce cas être comprise entre 5 cm et 35 cm.

L'amortisseur (100) est un amortisseur télescopique dont le cylindre (101) peut être relié au bâti (40) ou à la structure porte-outil (80) et dont le piston (102) peut être relié respectivement à la structure porte-outil (80) ou au bâti (40) via une tige de piston (103). De préférence, il s'agit d'un amortisseur hydraulique.

La Fig.5 montre schématiquement une vue en coupe longitudinale d'un exemple d'un tel amortisseur (100).
Il comporte un cylindre (101) enfermant un piston (102) relié à une tige de piston (103), ladite tige de piston (103) sortant du cylindre (101) au travers d'une ouverture (107) munie d'un joint d'étanchéité. Le cylindre (101) est partiellement rempli d'un fluide hydraulique, tel que de l'huile par exemple. Le niveau de fluide hydraulique dans le cylindre (101) est indiqué par une ligne à tirets sur la Fig. 5. L'espace du cylindre (101) situé au-dessus de ce niveau est rempli d'un gaz, par exemple de l'air. Le piston (102) inclut de préférence un ou plusieurs joints d'étanchéité circonférentiels afin d'assurer une étanchéité entre le piston (102) et le cylindre (101). Dans ce cas, le piston (102) est par ailleurs traversé axialement par au moins un trou de relativement petit diamètre afin de freiner l'écoulement du fluide hydraulique d'une coté vers l'autre du piston (102) lorsque ce dernier est mis en mouvement, ce qui fournit l'effet d'amortissement. De préférence l'au moins un trou est un trou calibré. Dans le cas où le piston (102) n'inclurait pas de joint d'étanchéité circonférentiel, ce trou n'est pas indispensable car le fluide hydraulique pourra passer entre le piston et le cylindre, ce qui fournira aussi l'effet d'amortissement. Ce dernier cas est toutefois moins préféré car le coefficient d'amortissement dépendra des variations de dimensions lors de la fabrication et qu'il sera donc moins prédictible.

De préférence, le piston (102) inclut un ou plusieurs joints d'étanchéité circonférentiels et le piston (102) est traversé axialement par un premier trou (104a) ayant un premier diamètre et par un deuxième trou (105a) ayant un deuxième diamètre, le premier diamètre étant plus grand que le deuxième diamètre. Le premier trou (104a) est dans ce cas muni d'un premier clapet (104b) configuré pour laisser passer le fluide hydraulique lorsque le piston se rapproche du fond de cylindre (110) et pour ne pas laisser passer le fluide hydraulique lorsque le piston s'éloigne du fond de cylindre (110) (tout comme un clapet dit « anti-retour »). Le deuxième trou (105a) est optionnellement muni d'un deuxième clapet (105b) configuré pour laisser passer le fluide hydraulique lorsque le piston se rapproche du fond de cylindre (110) et pour ne pas laisser passer le fluide hydraulique lorsque le piston s'éloigne du fond de cylindre (110) (tout comme un clapet dit « anti-retour »). Ainsi, l'amortisseur (100) possèdera un coefficient d'amortissement différent selon que l'amortisseur (100) agit dans un sens ou dans le sens opposé.

Dans l'exemple de la Fig. 5, étant donné la position des clapets et le fait que le premier diamètre est plus grand que le deuxième diamètre, le coefficient d'amortissement sera plus grand lorsque le piston (102) descend dans le cylindre (101) que lorsqu'il remonte dans le cylindre (101). En conséquence, l'amortissement est plus important lorsque l'outil de détalonnage (70) est dans son mouvement descendant, c'est-à-dire son mouvement de travail pour détalonner le pneu (2), que lorsqu'il est dans son mouvement ascendant, c'est-à-dire son mouvement de retour à sa position de repos. Cet effet d'amortissement asymétrique a été conçu par les inventeurs car il présente l'avantage d'amortir plus le mouvement de la structure porte-outil (80) lorsqu'elle est dans son mouvement de travail, en particulier lorsque le pneu (2) est détalonné, que lorsque ladite structure porte-outil (80) retourne à sa position de repos.

La Fig.6 montre schématiquement une vue en coupe longitudinale d'un autre exemple d'un tel amortisseur (100). Ici, le piston (102) est monté coulissant à la tige de piston (103) et entre deux disques qui sont fixés à la tige de part et d'autre du piston (102). Le disque supérieur (104b) a un diamètre supérieur au diamètre du premier trou (104a), et il bloquera donc le premier trou (104a) lorsque la structure porte-outil (80) (et donc la tige de piston (103)) est poussée vers le bas par l'actionneur (90) pneumatique, alors qu'il libérera le premier trou (104a) lorsque la structure porte-outil (80) (et donc la tige de piston (103)) est tirée vers le haut, ce qui résultera dans le même comportement asymétrique que celui de l'amortisseur (100) de la Fig. 5.

Il va de soi que le piston (102) peut comporter plusieurs premiers trous (104a) et/ou plusieurs deuxièmes trous (105a). Dans ce cas, il faut comprendre que le premier diamètre est la somme des diamètres des premiers trous, et que le deuxième diamètre est la somme des diamètres des deuxièmes trous.

Il sera évident pour l'homme du métier que bien d'autres configurations sont possibles pour obtenir ladite asymétrie dans le comportement de l'amortisseur (100).

Dans le cas d'une machine de détalonnage d'un pneu (2) d'une roue (1) de voiture, on peut par exemple prévoir un amortisseur hydraulique (100) dont le cylindre (101) a un diamètre compris entre 30 mm et 50 mm, dont la tige de piston (103) a un diamètre compris entre 15 mm et 25 mm, dont le deuxième trou (105a) a un diamètre compris entre 1 mm et 5 mm, et dont le premier trou (104a) a un diamètre compris entre 6 mm et 10 mm.

De préférence, l'axe (A1) du cylindre (101) de l'amortisseur (100) est parallèle ou confondu à l'axe (A2) de la colonne (81), comme on peut mieux le voir sur la Fig. 4.

Comme illustré aux Figs. 4, 5 et 6, le cylindre (101) de l'amortisseur (100) est de préférence relié au bâti (40), et le piston (102) de l'amortisseur (100) est de préférence relié à la structure porte-outil (80) via la tige de piston (103), ce qui limite les risques de fuites du liquide hydraulique toujours présent dans la partie basse cylindre (101).

Afin de faire remonter la structure porte-outil (80) après le détalonnage du pneu (2), on peut prévoir des moyens élastiques reliés entre le bâti (40) et la structure porte-outil (80). Lesdits moyens élastiques peuvent par exemple comporter un ou plusieurs ressorts montés de manière à ce qu'ils se tendent lorsque l'outil de détalonnage (70) se rapproche du plateau d'appui (50). Ainsi, lorsque la pression pneumatique est relâchée dans l'actionneur (90), le(s) ressort(s) feront automatiquement s'éloigner l'outil de détalonnage (70) du plateau d'appui (50).

De préférence, lesdits moyens élastiques comportent au moins un ressort à gaz de poussée, monté entre la structure porte-outil (80) et le bâti (40). De tels ressorts à gaz sont connus et peuvent par exemple être ceux utilisés couramment pour relever le hayon ou le coffre d'une voiture par exemple. De préférence, lesdits ressorts sont montés de sorte que leur axe est parallèle ou confondu avec l'axe (A1) du cylindre (101) de l'amortisseur (100).

La présente invention a été décrite en relation avec des modes de réalisations spécifiques, qui ont une valeur purement illustrative et ne doivent pas être considérés comme limitatifs. D'une manière générale, il apparaîtra évident pour l'homme du métier que la présente invention n'est pas limités aux exemples illustrés et/ou décrits ci-dessus.
La présence de numéros de référence aux dessins ne peut être considérée comme limitative, y compris lorsque ces numéros sont indiqués dans les revendications. L'usage des verbes « comprendre », « inclure », « comporter », ou toute autre variante, ainsi que leurs conjugaisons, ne peut en aucune façon exclure la présence d'éléments autres que ceux mentionnés.
L'usage de l'article indéfini « un », « une », ou de l'article défini « le », « la » ou « l' », pour introduire un élément n'exclut pas la présence d'une pluralité de ces éléments.

En résumé, l'invention peut également être décrite comme suit : une machine de détalonnage d'un pneu (2) d'une roue (1), comportant un bâti (40) conçu pour reposer sur un sol, un plateau d'appui (50) pour la roue (1), et un outil de détalonnage (70) relié à une structure porte-outil (80) montée mobile au bâti (40). La machine comporte un actionneur pneumatique (90) pour mettre la structure porte-outil (80) en mouvement afin de faire travailler l'outil, et un amortisseur (100) reliant la structure porte-outil (80) au bâti (40) afin d'amortir le mouvement de la structure porte-outil (80), en particulier au moment où le pneu (2) se décolle de la jante (3) de la roue (1).

L'invention concerne également une machine de montage et de démontage d'un pneu d'un roue incluant une machine de détalonnage du pneu de la roue telle que décrite ci-dessus. Dans ce cas, le bâti de la machine de montage et de démontage du pneu peut par exemple être le même que le bâti (40) de la machine de détalonnage du pneu (2) telle que décrite ci-dessus et comporter en outre un dispositif de montage et de démontage du pneu (2) tel qu'il en existe une multitude dans l'état de la technique. Dans ce cas, le plateau d'appui (50) sera de préférence monté mobile en rotation au bâti (40) de manière à pouvoir faire travailler le dispositif de montage et de démontage du pneu (2).

## Revendications

1. Machine de détalonnage d'un pneu (2) d'une roue (1), comportant :
- un bâti (40) conçu pour reposer sur un sol,
- un plateau d'appui (50) pour y appuyer un coté latéral de la roue (1),
- un outil de détalonnage (70) faisant face au plateau d'appui (50) et monté à une structure porte-outil (80), ladite structure porte-outil (80) étant montée mobile au bâti (40),
- un actionneur (90) relié au bâti (40) et à la structure porte-outil (80) et configuré pour mettre la structure porte-outil (80) en mouvement de sorte à déplacer l'outil de détalonnage (70) vers le plateau d'appui (50),
- ledit actionneur (90) étant un actionneur (90) purement pneumatique, **caractérisée en ce que**
- la machine de détalonnage comprend en outre un amortisseur (100) monté entre la structure porte-outil (80) et le bâti (40),
**en ce que** l'amortisseur (100) est un amortisseur (100) télescopique dont le cylindre (101) est relié à la structure porte-outil (80) ou au bâti (40) et dont le piston (102) est relié respectivement au bâti (40) ou à la structure porte-outil (80) via une tige de piston (103)
et **en ce que** l'amortisseur (100) possède un coefficient d'amortissement différent selon que l'amortisseur (100) agit dans un sens ou dans le sens opposé.

2. Machine selon la revendication 1, **caractérisée en ce que** l'amortisseur (100) est un amortisseur (100) hydraulique.

3. Machine selon la revendication 1 ou 2, **caractérisée en ce que** l'amortisseur (100) possède un coefficient d'amortissement qui est plus grand lorsque le piston (102) s'approche d'un fond (110) du cylindre (101) que lorsque le piston (102) s'éloigne du fond (110) du cylindre (101).

4. Machine selon l'une quelconque des revendications précédentes, **caractérisée en ce que** l'actionneur (90) est un coussin d'air gonflable dont une face (91) est reliée à - ou bute sur le bâti (40), et dont une face opposée (92) est reliée à - ou bute sur la structure porte-outil (80), ledit coussin d'air comportant au moins une entrée d'air comprimé (95).

5. Machine selon l'une quelconque des revendications précédentes, **caractérisée en ce que** le plateau d'appui (50) forme un angle compris entre 0° et 10° par rapport à un plan horizontal, **en ce que** la structure porte-outil (80) comporte une colonne (81) montée mobile en translation linéaire par rapport au bâti (40), et **en ce que** l'actionneur (90) est configuré pour mettre la structure porte-outil (80) en mouvement selon ladite translation linéaire.

6. Machine selon la revendication 5 lorsqu'elle dépend de l'une quelconque des revendications 1 à 4, **caractérisée en ce que** l'axe (A1) du cylindre (101) de l'amortisseur (100) est parallèle ou confondu à l'axe (A2) de la colonne (81).

7. Machine l'une quelconque des revendications 1 à 6, **caractérisée en ce que** le cylindre (101) de l'amortisseur (100) est relié au bâti (40) et **en ce que** le piston (102) de l'amortisseur (100) est relié à la structure porte-outil (80) via la tige de piston (103).

8. Machine selon l'une quelconque des revendications précédentes, **caractérisée en ce que** la machine comporte en outre des moyens élastiques reliés entre le bâti (40) et la structure porte-outil (80) et configurés pour éloigner du pneu (2) l'outil de détalonnage (70), après détalonnage.

9. Machine selon la revendication 8, **caractérisée en ce que** lesdits moyens élastiques comportent au moins un ressort à gaz de poussée, monté entre la structure porte-outil (80) et le bâti (40).

10. Machine de montage et de démontage d'un pneu (2) d'une roue (1) incluant une machine de détalonnage du pneu (2) de la roue (1) selon l'une quelconque des revendications précédentes.

## Patentansprüche

1. Maschine zur Entwulstung eines Reifens (2) eines Rades (1), umfassend:
- ein Gestell (40), das zum Ruhen auf dem Boden entwickelt ist,
- eine Stützplatte (50), um dort eine laterale Seite des Rades (1) aufzustützen,
- ein Entwulstungswerkzeug (70), das gegenüber der Stützplatte (50) angeordnet ist und auf einer Werkzeugträger-Struktur (80) montiert ist, wobei die genannte Werkzeugträger-Struktur (80) bewegbar am Gestell (40) montiert ist,
- einen Betätigungsorgan (90), das mit dem Gestell (40) und mit der Werkzeugträger-Struktur (80) verbunden und konfiguriert ist, um die Werkzeugträger-Struktur (80) derart in Bewegung zu versetzen, dass das Entwulstungswerkzeug (70) zur Stützplatte (50) versetzt wird,
- wobei das genannte Betätigungsorgan (90) ein rein pneumatisches Betätigungsorgan (90) ist,
**dadurch gekennzeichnet, dass**
- die Entwulstungsmaschine darüber hinaus einen Dämpfer (100) umfasst, der zwischen der Werkzeugträger-Struktur (80) und dem Gestell (40) montiert ist,
dass der Dämpfer (100) ein teleskopischer Dämpfer (100) ist, dessen Zylinder (101) mit der Werkzeugträger-Struktur (80) oder dem Gestell (40) verbunden ist und dessen Kolben (102) jeweils mit dem Gestell (40) oder der Werkzeugträger-Struktur (80) über eine Kolbenstange (103) verbunden ist
und dass der Dämpfer (100) einen unterschiedlichen Dämpfungskoeffizienten besitzt, je nachdem, ob der Dämpfer (100) in einer Richtung oder in der entgegengesetzten Richtung wirkt.

2. Maschine gemäß Anspruch 1, **dadurch gekennzeichnet, dass** der Dämpfer (100) ein hydraulischer Dämpfer (100) ist.

3. Maschine gemäß Anspruch 1 oder 2, **dadurch gekennzeichnet, dass** der Dämpfer (100) einen Dämpfungskoeffizienten besitzt, der größer ist, wenn der Kolben (102) sich dem Boden (110) des Zylinders (101) nähert, als wenn der Kolben (102) sich vom Boden (110) des Zylinders (101) entfernt.

4. Maschine gemäß irgendeinem der voranstehenden Ansprüche, **dadurch gekennzeichnet, dass** das Betätigungsorgan (90) ein aufblasbares Luftkissen ist, dessen eine Seite (91) mit dem Gestell (40) verbunden ist oder darauf anschlägt und dessen entgegengesetzte Seite (92) mit der Werkzeugträger-Struktur (80) verbunden ist oder darauf anschlägt, wobei das genannte Luftkissen wenigstens einen Drucklufteingang (95) umfasst.

5. Maschine gemäß irgendeinem der voranstehenden Ansprüche, **dadurch gekennzeichnet, dass** die Stützplatte (50) einen zwischen 0° und 10° im Verhältnis zu einer horizontalen Ebene eingeschloßenen Winkel bildet, dass die Werkzeugträger-Struktur (80) eine in linearer Translation im Verhältnis zum Gestell (40) mobil montierte Säule (81) umfasst und dass das Betätigungsorgan (90) konfiguriert ist, um die Werkzeugträger-Struktur (80) gemäß der genannten linearen Translation in Bewegung zu setzen.

6. Maschine gemäß Anspruch 5, wenn sie von irgendeinem der Ansprüche 1 bis 4 abhängt, **dadurch gekennzeichnet, dass** die Achse (A1) des Zylinders (101) des Dämpfers (100) parallel zur Achse (A2) der Säule (81) ist oder mit ihr zusammenfällt.

7. Maschine gemäß irgendeinem der Ansprüche 1 bis 6, **dadurch gekennzeichnet, dass** der Zylinder (101) des Dämpfers (100) mit dem Gestell (40) verbunden ist und dass der Kolben (102) des Dämpfers (100) mit der Werkzeugträger-Struktur (80) über die Kolbenstange (103) verbunden ist.

8. Maschine gemäß irgendeinem der voranstehenden Ansprüche, **dadurch gekennzeichnet, dass** die Maschine darüber hinaus elastische Mittel umfasst, die zwischen dem Gestell (40) und der Werkzeugträger-Struktur (80) verbunden und konfiguriert sind, um das Entwulstungswerkzeug (70) nach dem Entwulsten von dem Reifen (2) zu entfernen.

9. Maschine gemäß Anspruch 8, **dadurch gekennzeichnet, dass** die genannten elastischen Mittel wenigstens eine Gasdruckfeder umfassen, die zwischen der Werkzeugträger-Struktur (80) und dem Gestell (40) montiert ist.

10. Maschine zum Montieren und Demontieren eines Reifens (2) eines Rades (1), die eine Entwulstungsmaschine des Reifens (2) des Rades (1) gemäß irgendeinem der voranstehenden Ansprüche umfaßt.

## Claims

1. Machine for breaking the bead of a tyre (2) of a wheel (1) comprising:
- a frame (40) designed to rest on the floor,
- a support plate (50) to rest the lateral side of the wheel (1),
- a bead breaker tool (70) facing the support plate (50) and mounted onto a tool-holder structure (80), the said tool-holder structure (80) being mounted on the frame (40) in such a manner that it can move,
- an actuator (90) connected to the frame (40) and to the tool-holder structure (80) and configured to move the tool-holder structure (80) so as to move the bead breaker tool (70) towards the support plate (50),
- the said actuator (90) being purely pneumatic,
**characterised in that**
- the machine further comprises a shock absorber (100) mounted between the tool-holder structure (80) and the frame (40),
**in that** the shock absorber (100) is a telescopic shock absorber (100), the cylinder (101) of which is connected to the tool-holder structure (80) or to the frame (40) and the piston of which is connected to the frame (40) or the tool-holder structure (80) respectively, by a piston rod (103),
and **in that** the shock absorber (100) has a different shock absorbing coefficient depending on whether the shock absorber (100) operates in one direction or in the opposite direction.

2. Machine according to Claim 1, **characterised in that** the shock absorber (100) is a hydraulic shock absorber (100).

3. Machine according to Claim 1 or 2, **characterised in** such that the shock absorber (100) has a shock absorbing coefficient that is greater when the piston (102) gets closer to the bottom (110) of the cylinder (101) than when the piston (102) moves away from the bottom (110) of the cylinder (101).

4. Machine according to any one of the preceding claims, **characterised in that** the actuator (90) is an inflatable air cushion, one side (91) of which is attached to - or rests on the frame (40), and the opposite side (92) of which is attached to - or rests on the tool-holder structure (80), with the said air cushion comprising at least one compressed air inlet (95).

5. Machine according to any one of the preceding claims, **characterised in that** the support plate (50) forms an angle between 0° and 10° in relation to a horizontal plane, **in that** the tool-holder structure (80) comprises a column (81) mounted in such a manner that it can move in linear translation in relation the the frame (40), and **in that** the actuator (90) is configured to move the tool-holder structure (80) according to the said linear translation.

6. Machine according to Claim 5 when dependent on any one of the claims from 1 to 4, **characterised in that** the axis (A1) of the cylinder (101) of the shock absorber (100) is parallel or in line with the axis (A2) of the column (81).

7. Machine according to any one of the claims from 1 to 6, **characterised in that** the cylinder (101) of the shock absorber (100) is connected to the frame (40) and **in that** the piston (102) of the shock absorber (100) is connected to the tool-holder structure (80) by the piston rod (103).

8. Machine according to any one of the preceding claims, **characterised in that** the machine further comprises elastic means attached between the structure (40) and the tool-holder structure (80) and configured to move the bead breaking tool (70) away from the tyre (2), after the bead breaking operation.

9. Machine according to Claim 8, **characterised in that** the said elastic means comprise at least one thrust gas spring, mounted between the tool-holder structure (80) and the frame (40).

10. Tire changer machine including a machine according to any one of the preceding claims.
